# EUROPEAN PATENT APPLICATION

(11) **EP 1 291 521 A1**
(43) Date of publication of application: **12.03.2003**
(21) Application number: 01203373.4
(22) Date of filing: 06.09.2001
(51) Int. Cl.: F03D 11/00, F03D 11/04

(54) **Wind turbine nacelle with moving crane**

(71) Applicant: Turbowinds N.V./S.A., 3090 Overijse (BE)
(72) Inventor: Croes, Valère, 3500 Hasselt (BE)
(74) Representative: Vandeberg, Marie-Paule L.G.

(57) **Abstract**

A wind turbine comprises a nacelle (2) on a tower (1) and is provided with (in one aspect of the invention) a rotor lock device (5a) for locking a rotor disk (5b) and fixation means (12) for fixing the rotor disk to the nacelle (2). In another aspect of the invention the nacelle is provided with an overhead frame (6) from which the generator is suspended and doors (7) at the bottom of the nacelle.

## Description

The invention relates to a wind turbine having a nacelle housing a main shaft, a gear box and a generator, the nacelle being positioned on a tower, and to the nacelle a hub with rotor blades being attached.

For wind turbines of considerable power (higher than 800 KWatt) it is customary to house the main shaft, the gear box and the generator in a nacelle positioned on a post. The typical height of the tower is 40-60 meters or more.

Maintenance of such wind turbines is a considerable factor in the total cost and effort of any project.

It is therefore an object of the invention to provide a wind turbine for which maintenance costs and/or the service life time are improved.

To this end a wind turbine in accordance with one aspect of the invention is characterised in that it comprises a rotor disk in between the hub and the nacelle attached to the hub and co-rotating in operation with the hub, and the nacelle comprises a rotor disk lock device for locking the rotor disk and fixation means for fixating the rotor disk to the nacelle.

The locking (meaning preventing of rotation) and fixation of the rotor disk (making a firm connection to the nacelle) makes it possible to exchange the gear box, main shaft and main bearing without having to bring down the blades of the rotor hub, as is customary. This reduces the costs of maintenance considerably, which is of great importance. It also makes an overhaul of the machinery inside the nacelle simpler, which can be used to extend the service life-time of the structure itself.

Preferably the rotor disk is provided with tapered apertures and the nacelle is provided with a movable shaft with a tapered end to co-operate with the tapered apertures of the rotor disk to lock the rotor disk. The tapered shaft and apertures allow for compensation of misalignment between the shaft and the holes and the elimination or at least reduction of play between the shaft and the holes. This increase the speed and accuracy with which the rotor is locked reducing the time needed for a maintenance or repair and reducing wear on the rotor locking device. Preferably the shaft is movable from inside the nacelle. Preferably the rotor lock disk comprises 4n, where n is the number of blades, tapered holes substantially equally distributed. The rotor can therewith be locked in discrete positions allowing each of the blades to be locked in a vertical upward, vertical downward and horizontal position.

The rotor disk may form an integral part of the hub, but is preferably a separate part attached to the hub. This enables the hub to be taken off from the nacelle, while the locked and fixed rotor disk stays in place.

The rotor disk preferably has a generally bowl or curved shaped form, the smaller section facing the hub, the larger section facing the nacelle. When the hub and blades are fixed to the nacelle via the rotor disk, considerable forces (gravitational and wind forces) may be exerted on the blades and hub and via the rotor disk on the nacelle. A bowl or curved shape leads to a better distribution of said forces in the disk and nacelle, reducing the risk of failure.

For off-shore wind farm projects, but also for very high (80 meters or more) on-shore wind farm projects, or for projects in difficult terrain, e.g. mountainous terrain, the infrastructural costs are comparable to or may even exceed the cost of the wind turbines themselves. These costs, in so far as relating to off-shore projects, are related to specific problems imposed by the marine environment, such as:
- design of wave resistant foundations.
- Electric power cable connection to the shore
- Measures to be taken against corrosion
- Use of expensive floating cranes
- Dependence on weather conditions.

The infrastructural costs can rise to 70% of the total costs.

As a consequence of the high infrastructural costs, the service life of the wind turbine is preferably increased and the down time during maintenance and repair reduced.

To this end a wind turbine in accordance with another aspect of the invention is characterised in that the nacelle comprises an overhead frame from which the generator is suspended and doors at the bottom of the nacelle.

This construction allows the turbine parts housed by the nacelle to be hoisted and lowered by a ground based winch, using the overhead frame as a bridge to which pulleys are attached. Use of expensive floating cranes can therewith be avoided or in any case reduced, which reduces the costs of maintenance and the time needed for such maintenance and dependence on weather conditions is also reduced.

Preferably the nacelle comprises a mobile beam section attachable to the overhead frame which, in attached position, extends over the hub.

This construction allows the hub and the blades to be hoisted and lowered by a ground based winch, using the mobile beam section and the overhead frame as bridges to which pulleys are attached. The advantages are the same as given above.

Preferably the nacelle comprises a skeleton structure comprising a tube shaped part, the longitudinal axis of which is in parallel with the rotation axis of the wind turbine, a front part facing the hub being an integral cylindrical body, a rear part facing away from the hub being cut at an oblique angle, the overhead frame being attached to an outside of the front part, while being attached to or near a rear-most section of the rear part via buttresses.

The cut part and the fact that the overhead frame is positioned outside the tube shaped part and the use of buttresses allows an increase in the freedom of movement to hoist and lower parts positioned inside the tube shaped part (the main axle) while still providing for a strong skeleton structure.

This other aspect of the invention, can most favourable be used with the hereinabove already first mentioned aspect of the invention, i.e. provision of the locking device and fixation means.

These and other objects of the invention will be apparent from and elucidated with reference to the exemplary embodiments described hereinafter.

### In the drawings :

Fig. 1 schematically shows a wind turbine;
Fig. 2 schematically shows a nacelle, hub and rotor blades for a wind turbine in accordance with the invention;
Fig. 3 shows in cross-section an example of rotor locking means;
Fig. 4 shows in cross-section rotor fixation means;
Fig. 5 shows part of a nacelle and a rotor disk for a wind turbine in accordance with the invention.
Fig. 6 illustrates the hoisting and lowering of a generator in a wind turbine in accordance with the invention.
Fig. 7 illustrates the hoisting and lowering of a gear box in a wind turbine in accordance with the invention.
Fig. 8 illustrates the hoisting and lowering of a main shaft in a wind turbine in accordance with the invention.
Fig. 9 illustrates the hoisting and lowering of a rotor blade in a wind turbine in accordance with the invention.
Fig. 10 illustrates the hoisting and lowering of a hub in a wind turbine in accordance with the invention.
Fig. 11 illustrates a skeleton structure for an embodiment of the invention.

The Figures are not drawn to scale. In the Figures, like reference numerals generally refer to like parts.

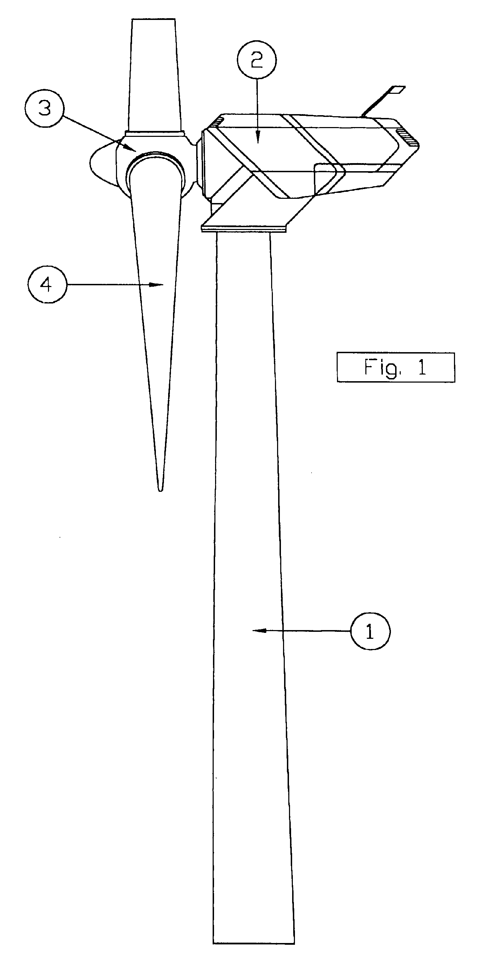

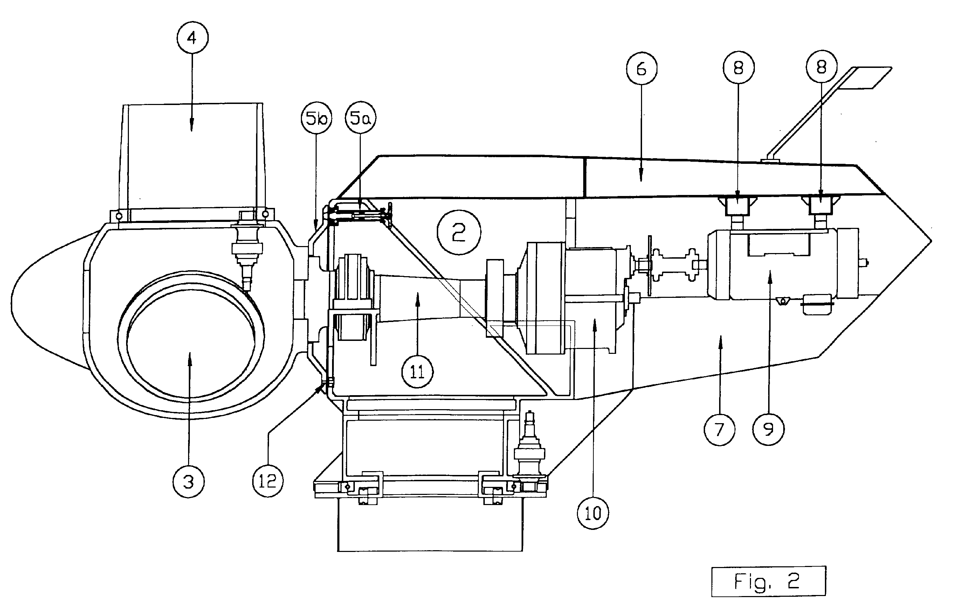

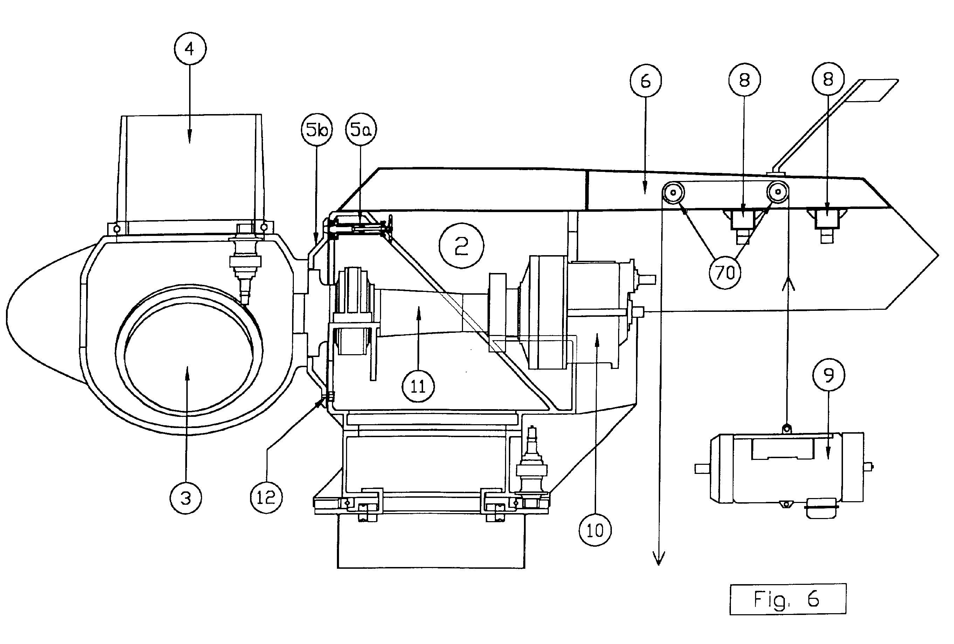

Figure 1 shows in partial cross-sectional view a wind turbine. The turbine comprises on a tower 1 a structure 2, which houses means to convert the rotational energy of the blades 4 into electrical energy or energy of another form. The blades are connected to a hub 3. In this examplary embodiment of the invention, the means to convert the rotational energy of the blades into electrical energy comprise a main shaft (11), a gear box 10 and a generator 9, as is shown in more detail in Figure 2.
In order to prevent the rotation of the rotor during maintenance the nacelle is provided with rotor locking means comprising means 5a in the nacelle and a rotor disk 5b positioned between the hub 3 and the nacelle 2. Furthermore the nacelle comprises a beam 6 to which the generator is hung by means of attachment means 8. The nacelle comprises doors 7 at the bottom part of the nacelle. The function of these elements will be explained with reference to figures 6 to 10.
A wind turbine in accordance with the invention comprises a rotor lock device 5a and a rotor disk 5b. The rotor disk lock device locks the rotor disk, i.e. prevents rotation of the rotor disk and thereby the with the rotor coupled hub and blades. When the rotor disk is locked, however, still considerable movement and thereby forces on and via the locked hub and blades can be exerted. Fixation of the rotor disk 5b is done by means of fixation means 12. The fixation of the rotor disk, hub and blades makes it possible to exchange the gear box, main shaft and main bearing without having to bring down the blades of the rotor hub, as is customary. This reduces the costs of maintenance considerably, which is of great importance.

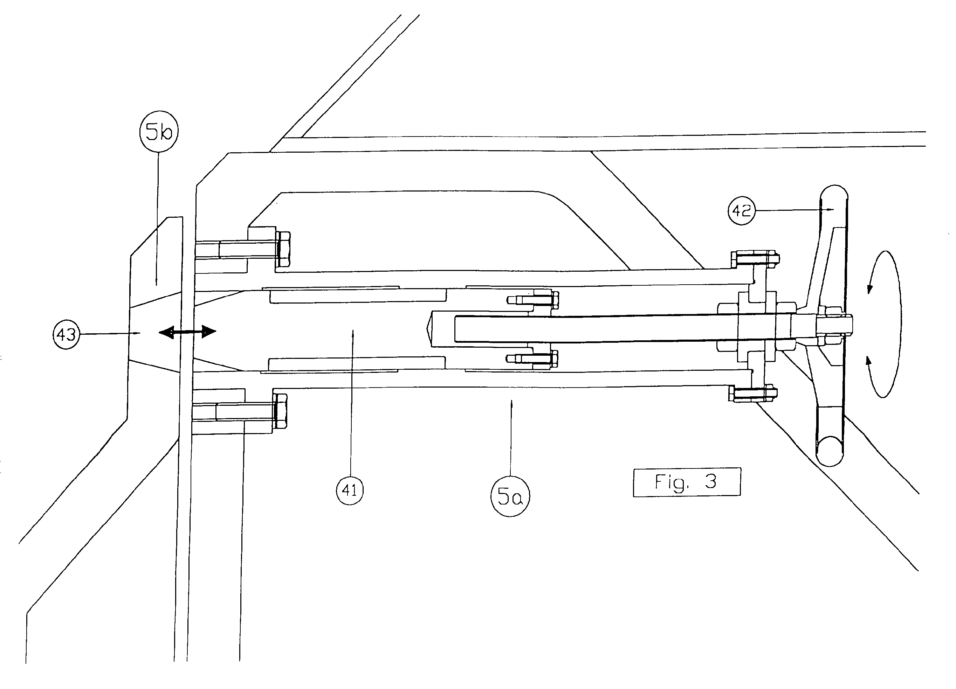

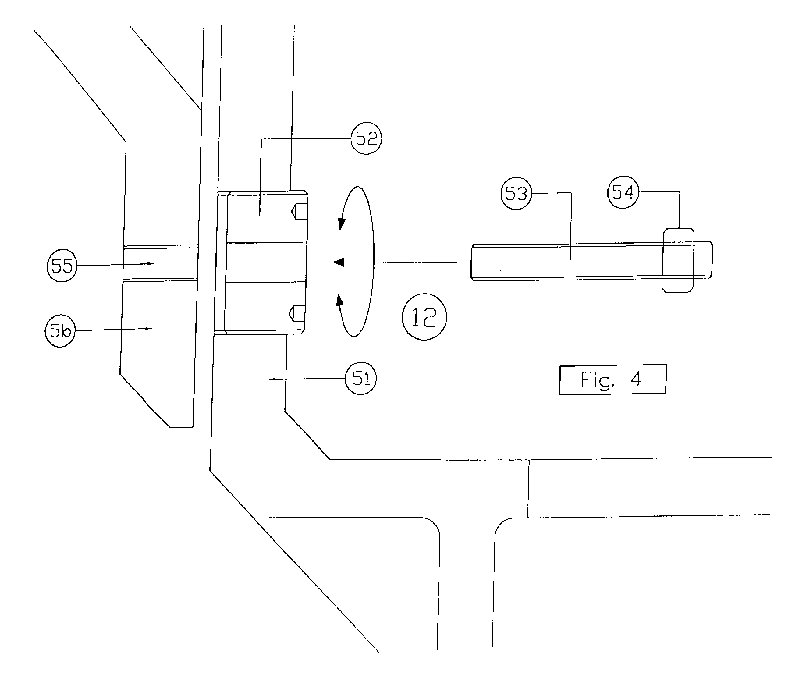

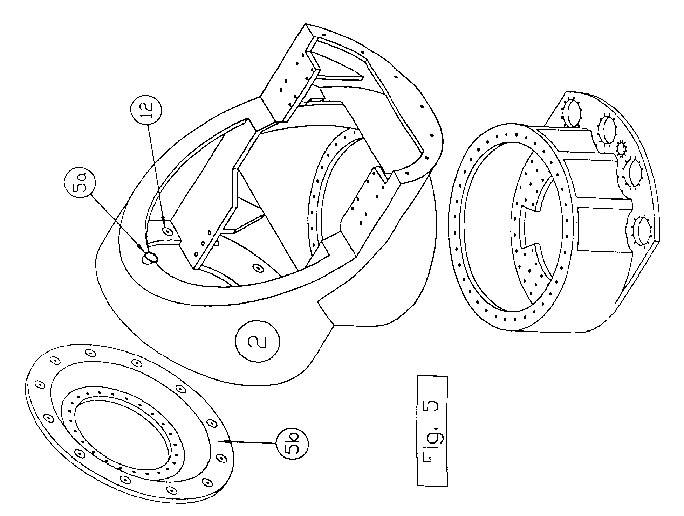

The rotor lock device preferably (see figure 3) comprises tapered apertures 43 and the nacelle is provided with a movable shaft 41 with a tapered end to co-operate with the tapered apertures 43 of the rotor disk to lock the rotor disk. The tapered shaft and apertures allow for compensation of misalignment between the shaft and the holes and the elimination or reduction of play between of the shaft and the holes. Preferably the nacelle has moving means inside the nacelle for moving the shaft. Placing this means inside the nacelle enables operators to safely lock and unlock the rotor. In this example the moving means comprise a manually operatable turn wheel 42 which is also used for retracting the shaft for unlocking the rotor. Once the rotor is locked against rotation, the rotor disk is fixed against the front part of the nacelle by means of rotor disk fixing devices 12. The rotor disk fixing device comprise a number (e.g. 12) screws plugs 52 in front part 51 of the nacelle (see Fig. 4). The rotor can be fixed against the nacelle front part 51 by fastening these screw plugs against the rotor lock disk 5b, using a spanner wrench. After fastening the screw plugs, studs 53 and nuts 54 can be mounted to make a firm connection. Once the rotor disk has been locked and fixed properly, it is possible to exchange the gearbox, main shaft and main bearing, without the need to remove the blades and/or the hub. Vertical shear forces due to the hub and blades weight are taken up by the tapered lock shaft, while tilting and yawing moments acting on the rotor are taken up by the fixation means, thus providing a valuable means to exchange the components inside the nacelle fast and economically without the need to remove the rotor.
In a preferred embodiment (see fig. 5) the rotor lock disk 5b comprises 4n, where n is the number of blades, in this example with three blades 12 tapered holes substantially equally distributed. The rotor disk can therewith be locked in 12 discrete positions. These positions allow each of the blades to be locked in a vertical upward, vertical downward and horizontal position. The rotor disk is preferably as shown in figure 6 of a bowl or curved shaped, having a large diameter part being attached to the nacelle and a smaller diameter part being attached to the hub, at different planes.

For off-shore wind farm projects, but also for very high (80 meters or more) on-shore wind farm projects, the infrastructural costs are comparable to or exceed the cost of the wind turbines themselves. These costs, in so far as relating to off-shore projects, are related to specific problems imposed by the marine environment, such as:
- design of wave resistant foundations.
- Electric power cable connection to the shore
- Measures to be taken against corrosion
- Use of expensive floating cranes
- Dependence on weather conditions.

The infrastructural costs can rise to 70% of the total costs.

As a consequence of the high infrastructural costs, the service life of the wind turbine is preferably increased and the down time during maintenance and repair reduced.

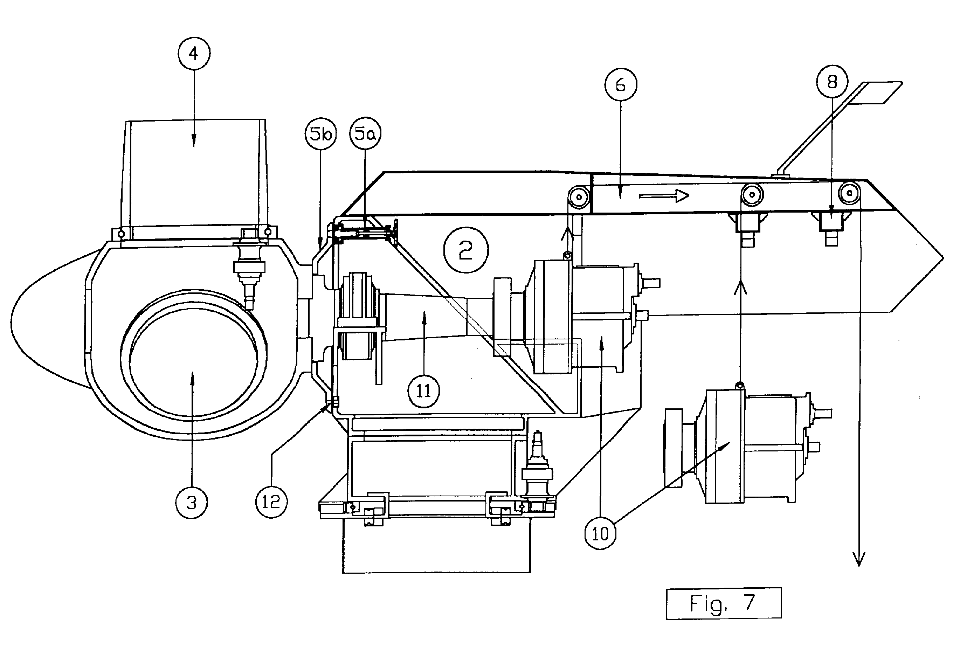

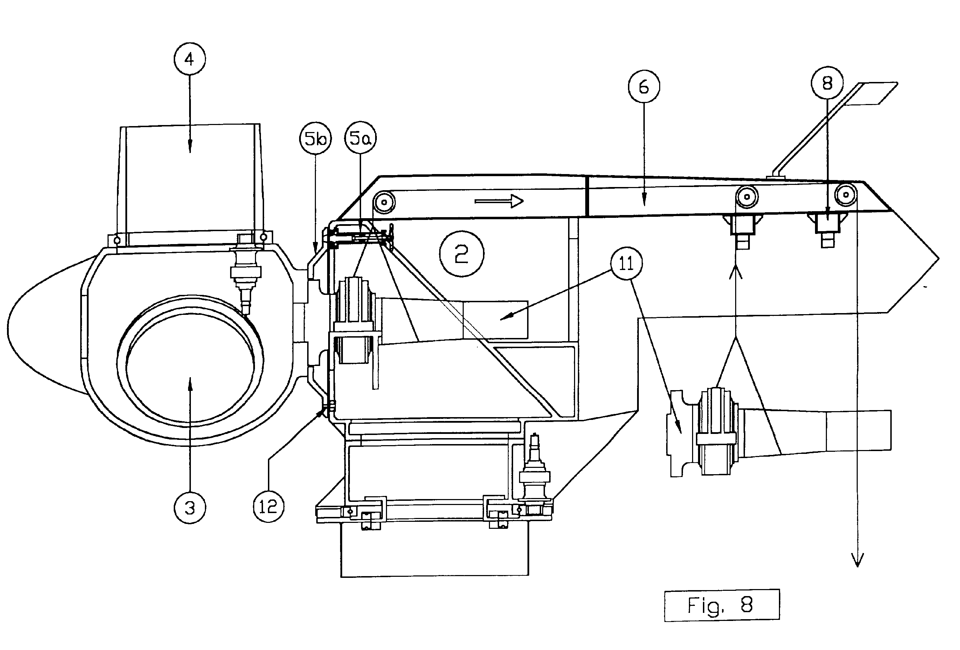

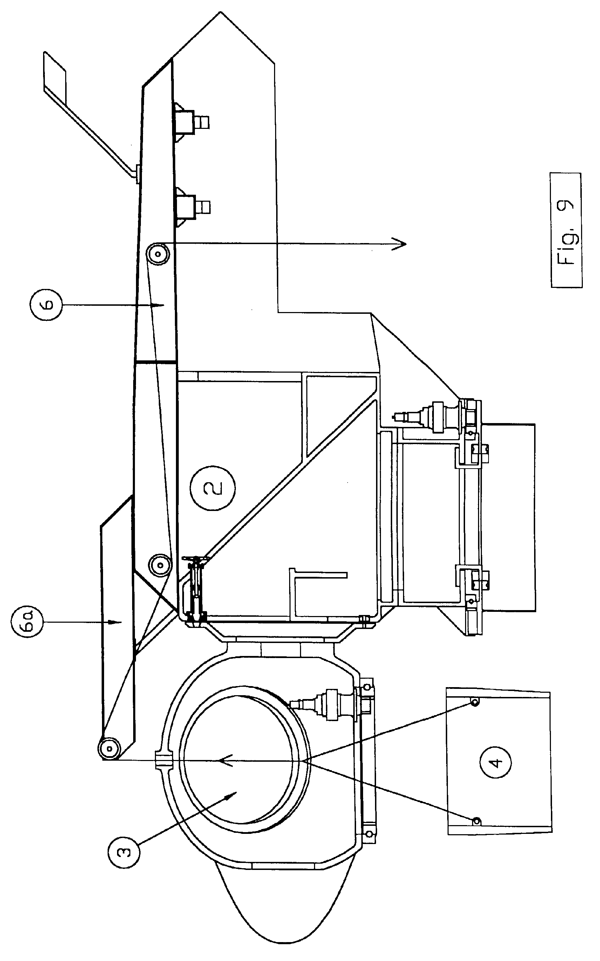

Figures 6 to 11 illustrate the wind turbine in accordance with the other aspect of the invention, more in particular illustrating hoisting and lowering of several components of the wind turbine, either components housed inside the turbine (figures 6 to 8) or outside (figures 9 and 110). The nacelle comprises an overhead frame 6 and doors 7 at the bottom of the nacelle. Opening the doors (schematically indicated in the figures) allows the generator 9 to be hoisted and lifted by means of a ground-based winch (not shown in the figures) via pulleys 70 on the overhead frame. Schematically the lines from and to the winch and the to be hoisted or lowered element are indicated by lines with arrows in them. In figure 6 the hoisting and lowering of the generator 9 is illustrated, in figure 7 hoisting and lowering of the gear box 10 is illustrated. The gear box is in a first step detached from the main shaft and transported backwards (indicated schematically by an horizontal arrow) and subsequently lowered (indicated schematically by an downwards pointing arrow). Figure 8 illustrates hoisting and lowering of the main shaft 11.

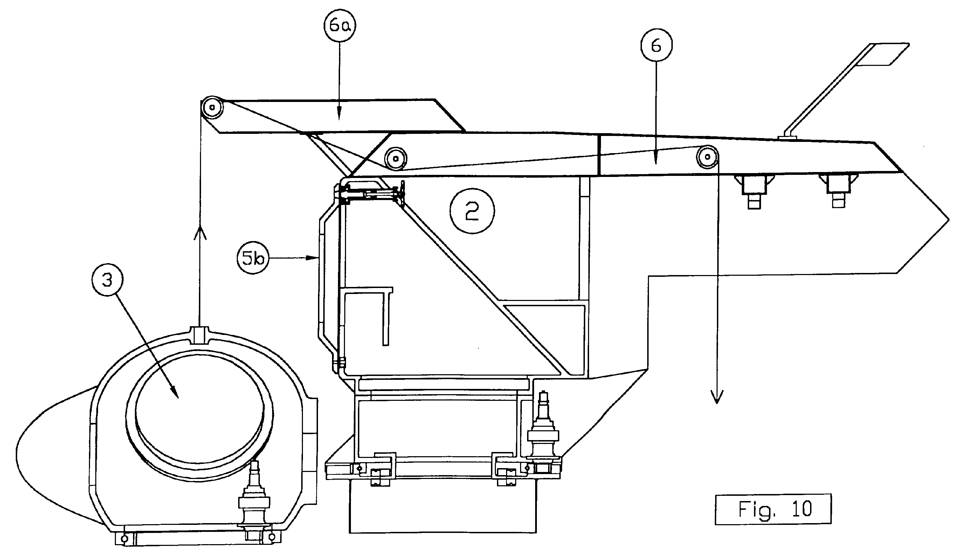

In a preferred embodiment of the wind turbine to the main frame a mobile beam section 6a is attached to the overhead frame 6 which, in attached position, and extends over the hub 3. Using pulleys on the mobile beam section and the overhead frame the hub 3 (see figure 10) and the blades 4 (see figure 9) can be hoisted and lowered by a ground based winch, using the mobile beam section and the overhead frame as bridges to which pulleys are attached. Due to the fact that cranes are no longer needed for these actions substantial savings in maintenance and increase in effective life time of the wind turbine are obtainable.

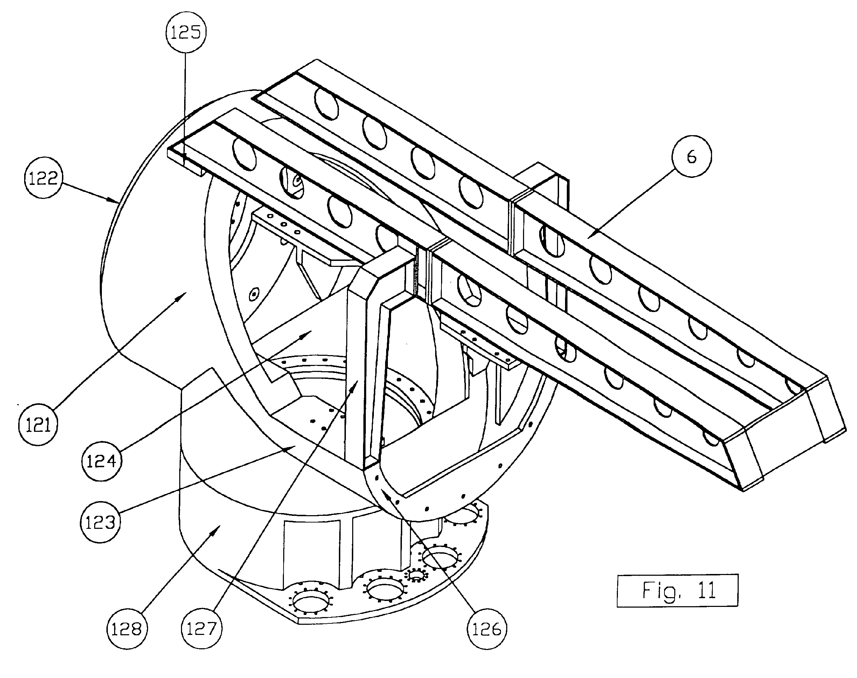

Figure 11 illustrates a preferred embodiment. A structural skeleton of the nacelle is here schematically shown. It comprises a generally tube shaped part 121 (see also figure 5 is which this tube shaped part is also shown) having a front part 122 facing the hub (to which in operation the rotor disk may be fixed, see figure 5). A rear part 123 is in cross section cut at an oblique angle forming an opening 124. The overhead frame 6 is attached (via attachment means 125) to the front part 122 of the tube shaped part 121, and via buttresses 127 to (or near to) a rear most part 126 of the tube shaped part 121. This construction allows easy and wide access via the opening 124 to the inside of the tube shaped part 121 to remove or install parts positioned inside this part easily using the overhead frame 6, while yet providing a strong structural skeleton which can withstand the forces exerted on the nacelle. This is of even more importance in the circumstances when the hub and blades are fixed to the nacelle, i.e. when both aspects are combined. Preferably the tube shaped part 121 is via a further tube shaped part 128 attached to the tower 2. Preferably the parts 121 and 128 form two substantially cylindrical bodies intersecting at 90°. Preferably the tube shaped (one or both) part(s) have a circular cross-section. Circular cross-section can best withstand forces. However, rectangular or polygonal cross-sections are also possible.

### In short the invention may be described as follows:

A wind turbine comprises a nacelle (2) on a tower (1) and is provided with (in one aspect of the invention) a rotor lock device (5a) for locking a rotor disk (5b) and fixation means (12) for fixing the rotor disk to the nacelle (2). In another aspect of the invention the nacelle is provided with an overhead frame (6) from which the generator is suspended and doors (7) at the bottom of the nacelle.

Preferably both aspects are combined.

It will be clear that within the framework of the invention many variations are possible.

## Claims

1. Wind turbine having a nacelle (2) housing a main shaft (11), a gear box (10) and a generator (9), the nacelle being positioned on a tower (1), and to the nacelle a hub (3) with rotor blades (4) being attached **characterised in that** the wind turbine comprises a rotor disk (5b) in between the hub (3) and the nacelle (2) and the nacelle comprises a rotor lock device (5a) and fixation means (12) for fixating the rotor disk to the nacelle.

2. Wind turbine as claimed in claim 1, **characterised in that** the rotor disk is provided with tapered apertures (43) and the nacelle is provided with a movable shaft 41 with a tapered end to co-operate with the tapered apertures (43) of the rotor disk to lock the rotor disk.

3. Wind turbine as claimed in claim 2, **characterised in that** the nacelle has moving means (42) inside the nacelle for moving the shaft.

4. Wind turbine as claimed in any of the preceding claims **characterised in that** the rotor lock disk 5b comprises 4n, where n is the number of blades (4), tapered holes (43) substantially equally distributed.

5. Wind turbine as claimed in claim in any of the preceding claims, **characterised in that** the rotor disk forms a part separable attached to the hub.

6. Wind turbine as claimed in any of the preceding claims, **characterised in that** the rotor disk (5b) has a generally bowl or curved shape, a smaller section facing the hub, a larger section facing the nacelle.

7. Wind turbine as claimed in any of the preceding claims **characterised in that** the nacelle (2) comprises an overhead frame (6) from which the generator (9) is suspended and doors (7) at the bottom of the nacelle.

8. Wind turbine as claimed in claim 7, **characterised in that** the nacelle (2) comprises a mobile beam section (6a) attachable to the overhead frame (6) which, in attached position, extends over the hub (3).

9. Wind turbine as claimed in claim 8 or 9, **characterised in that** the nacelle comprises a skeleton structure comprising a generally tube shaped part (121), the longitudinal axis of which is in parallel with the rotation axis of the wind turbine, a front part (122) facing the hub being an integral cylindrical body, a rear part (123) facing away from the hub being cut at an oblique angle, the overhead frame (6) being attached to an outside of the front part (122), while being attached to or near a rear-most section (126) of the rear part via buttresses (127).

10. Wind turbine having a nacelle (2) housing a main shaft (11), a gear box (10) and a generator (9), the nacelle being positioned on a tower (1), and to the nacelle a hub (3) with rotor blades (4) being attached **characterised in that** the nacelle (2) comprises an overhead frame (6) from which the generator (9) is suspended and doors (7) at the bottom of the nacelle.

11. Wind turbine as claimed in claim 10, **characterised in that** the nacelle (2) comprises a mobile beam section (6a) attachable to the overhead frame (6) which, in attached position, extends over the hub (3).

12. Wind turbine as claimed in claim 10 or 11, **characterised in that** the nacelle comprises a skeleton structure comprising a generally tube shaped part (121), the longitudinal axis of which is in parallel with the rotation axis of the wind turbine, a front part (122) facing the hub being an integral cylindrical body, a rear part (123) facing away from the hub being cut at an oblique angle, the overhead frame (6) being attached to an outside of the front part (122), while being attached to or near a rear-most section (126) of the rear part via buttresses (127).

13. Wind turbine as claimed in any of the preceding claims, **characterised in that** the wind turbine is an off-shore wind turbine.

14. Off-shore wind mill farm comprising a wind turbine as claimed in any of the preceding claims.
